# EUROPEAN PATENT SPECIFICATION

(11) **EP 3 269 188 B1**
(45) Date of publication and mention of the grant of the patent: **06.01.2021**
(21) Application number: 15886861.2
(22) Date of filing: 31.03.2015
(51) Int. Cl.: H04L 5/00, H04L 1/18, H04W 72/04, H04B 1/713, H04W 4/00, H04L 1/16, H04L 5/14

(54) **METHOD AND APPARATUS FOR DATA TRANSMISSION IN A WIRELESS COMMUNICATION SYSTEM**
VERFAHREN UND VORRICHTUNGEN ZUR DATENÜBERTRAGUNG IN EINEM DRAHTLOSKOMMUNIKATIONSSYSTEM
PROCÉDÉ ET APPAREIL POUR TRANSMISSION DE DONNÉES DANS UN SYSTÈME DE COMMUNICATION SANS FIL

(43) Date of publication of application: 17.01.2018
(73) Proprietor: NEC Corporation, Tokyo 108-8001 (JP)
(72) Inventor: SUN, Zhennian, Beijing 100084 (CN); WANG, Gang, Beijing 100084 (CN)
(74) Representative: MacDougall, Alan John Shaw
(86) International application number: PCT/CN2015/075454
(87) International publication number: WO 2016/154875

(56) References cited:
- EP-A1- 3 261 278
- WO-A1-2014/027851
- WO-A2-2012/022370
- US-A1- 2013 114 579
- US-A1- 2013 294 399
- NEC: "Performance of Uplink frequency hopping for LTE Rel-13 MTC", 3GPP DRAFT; R1-150288, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20150209 - 20150213 8 February 2015 (2015-02-08), XP050933498, Retrieved from the Internet: URL:http://www.3gpp.org/ftp/Meetings_3GPP_ SYNC/RAN1/Docs/ [retrieved on 2015-02-08]
- NTT DOCOMO: "Features for Rel-13 Low Cost MTC with UE Complexity Reduction", 3GPP DRAFT; R1-144962 REDUCED COMPLEITY FOR LC-MTC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. San Francisco, USA; 20141117 - 20141121 17 November 2014 (2014-11-17), XP050876010, Retrieved from the Internet: URL:http://www.3gpp.org/ftp/Meetings_3GPP_ SYNC/RAN1/Docs/ [retrieved on 2014-11-17]
- NEC: "Details of Retuning Symbols for FeMTC in Rel-14", 3GPP DRAFT; R1-1611717 DETAILS OF RETUNING SYMBOLS FOR FEMTC-V1A, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANC , vol. RAN WG1, no. Reno, USA; 20161114 - 20161118 4 November 2016 (2016-11-04), XP051189149, Retrieved from the Internet: URL:http://www.3gpp.org/ftp/tsg_ran/WG1_RL 1/TSGR1_87/Docs/ [retrieved on 2016-11-04]
- NEC: "Retuning Symbols for FeMTC in Rel-14", 3GPP DRAFT; R1-1609156 RETUNING SYMBOLS FOR FEMTC-V1A, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Lisbon, Portugal; 20161010 - 20161014 30 September 2016 (2016-09-30), XP051158459, Retrieved from the Internet: URL:http://www.3gpp.org/ftp/tsg_ran/WG1_RL 1/TSGR1_86b/Docs/ [retrieved on 2016-09-30]
- NOKIA NETWORKS: "Retuning Gaps for MTC", 3GPP DRAFT; R1-155132, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Malmö, Sweden; 20151005 - 20151009 25 September 2015 (2015-09-25), XP051021193, Retrieved from the Internet: URL:http://www.3gpp.org/ftp/tsg_ran/WG1_RL 1/TSGR1_82b/Docs/ [retrieved on 2015-09-25]

## Description

### FIELD OF THE INVENTION

Embodiments of the present disclosure generally relate to wireless communication techniques and more particularly relate to a method and apparatus for data transmission in a wireless communication system.

### BACKGROUND OF THE INVENTION

With the constant increase of mobile data services, the 3rd Generation Partnership Project (3GPP) organization has developed long-term evolution (LTE) specifications and LTE-Advanced (LTE-A) specifications. As the next generation cellular communication standard, an LTE or LTE-A system can operate in both Frequency Division Duplex (FDD) mode and Time Division Duplex (TDD) mode.

Machine-to-Machine (M2M) communication, which may also be called as Machine-Type Communications (MTC), is an emerging communication pattern. It refers to communication between computers, embedded processors, smart sensors, actuators and mobiles devices without or with only limited human intervention and it is quite advantageous in many applications such as sensing in extreme or hazard environment. Generally, many of MTC UEs are targeted for low-end applications (low average revenue per user, and low data rate) that can be handled adequately by GSM/GPRS and thus they may be implemented at low cost.

As LTE deployments evolve, it is desirable to reduce the cost of overall network maintenance by minimizing the number of Radio Access Technologies (RATs). However, there are deployed more and more MTC UEs in the field, which increases reliance on GSM/GPRS networks, and thus cost for operating these networks are increased. Hence, it will be very beneficial if low-end MTC UEs may be migrated from GSM/GPRS to LTE Networks.

Besides, in RANI, #78bis, reduced UE bandwidth of 1.4MHz for both downlink and uplink was agreed to be prioritized as the most important complexity reduction technique for Rel.13 MTC UEs.

In US patent application publication No. US2013/0294399A1, there is disclosed a data transmission method for machine type communication (MTC) and MTC Apparatus. In this application, each of a plurality of subframes configured with time slots and frequency resources is divided into a first region for transmitting control information and a second region for transmitting data; and resources for the MTC is allocated to the second according to a predetermined hopping period and a predetermined hopping frequency, wherein the RF retuning will be performed in the first region if the time for retuning is shorter than the time length of the first region or the first region and a part of the second region if the time for retuning is longer than the time length of the first region. However, in the solution as disclosed in US2013/0294399A1, there might be transmission mistakes during the transmission of MTC, especially when the tuning time is longer than the time length of the first region.

Therefore, there is a need for a new solution of data transmission in a wireless communication system.

NEC: "Performance of Uplink frequency hopping for LTE Rel-13 MTC"; 3GPP Draft R1-150288; 8 February 2015; 3GPP Mobile Competence Centre, 650 Route des Lucioles, Sophia-Antipolis, Cedex, discloses frequency hopping schemes for MTC PUSCH transmission, and discloses three options for UL frequency hopping for Rel-13 low complexity UEs in coverage enhanced mode, including: frequency hopping that is only applied within 1.4 MHz, frequency hopping that is only applied within the system bandwidth, and frequency hopping that is applied both within 1.4 MHz and within the system bandwidth.

NTT DOCOMO: "Features for Rel-13 Low Cost MTC with UE Complexity Reduction"; 3GPP Draft R1-144962; 17 November 2014;; 3GPP Mobile Competence Centre, 650 Route des Lucioles, Sophia-Antipolis, Cedex, discloses that to reduce UE complexity, the reduced UE bandwidth of 1.4 MHz is to be prioritized for Rel-13 LC-MTC UEs, and that UE operation is limited within such a reduced bandwidth. Also disclosed is a high-level system design for the reduced UE bandwidth in the downlink, and that multiple sets of reduced DL/UL bandwidth of 1.4 MHz could be indicated by a new SIB for LC-MTC UEs.

### SUMMARY OF THE INVENTION

The present invention provides a method in a wireless communication system performed by a user equipment, a user equipment, a method in a wireless communication system, and a wireless communication system, as set out in the appended claims.

The invention is solely defined by the appended claims. In the following, references to embodiments not falling within the scope of the claims are to be understood as examples useful for understanding the invention.

According to a first aspect of the present disclosure, there is provided a method in a wireless communication system performed by a User Equipment, UE, the method comprising performing a radio frequency, RF, retuning for hopping from a first narrowband including a special subframe for Time Division Duplex, TDD, to a second narrowband including an uplink subframe for TDD, wherein the special subframe comprises a start symbol and a last symbol, and the uplink subframe comprises a start symbol and a last symbol, wherein the UE does not transmit in a period comprising the last symbol of the special subframe in the first narrowband, the period being shorter than a length of the special subframe; and transmitting Physical Uplink Shared Channel, PUSCH, from the start symbol of the uplink subframe.

In an example, the plurality of symbols may be a part of a subframe and resting symbols of the subframe may be used to perform the data retransmission.

In another example, the subframe may be the first one of subframes planned for the data retransmission at the next hopped frequency. Or alternatively, the subframe may be the last one of subframes planned for the data retransmission before the next frequency hopping.

In a further example, the number of symbols may be determined as a minimal value that meets the RF retuning.

In a still further example, a whole subframe may be used to perform the RF retuning.

In a yet another example, the whole subframe may be the first one of subframes planned for the data retransmission at the next hopped frequency. Or alternatively, the whole subframe may be the last one of subframes planned for the data retransmission before the next frequency hopping.

In a still further example, the predetermined frequency hopping pattern may indicate a frequency hopping interval of at least two subframes in the time domain.

In a yet another example, the RF retuning may be performed in a special subframe between two frequency hoppings.

In a yet still another example, a hopping interval for frequency hopping in the time domain may be determined based on a configuration of subframe used for the data transmission.

In another example, the data transmission may be an uplink data transmission for Machine Type Communication (MTC).

According to a second aspect of the present disclosure, there is provided a User Equipment, UE, in a wireless communication system, the UE comprising: a module configured to: perform a radio frequency, RF, retuning for hopping from a first narrowband including a special subframe for Time Division Duplex, TDD, to a second narrowband including uplink subframe for TDD, wherein the special subframe comprises a start symbol and a last symbol, and the uplink subframe comprises a start symbol and a last symbol, wherein the module is configured not to transmit in a period comprising the last symbol of the special subframe in the first narrowband, the period being shorter than a length of the special subframe; and the module is configured to transmit Physical Uplink Shared Channel, PUSCH, from the start symbol of the uplink subframe.

Also disclosed is a computer-readable storage media with computer program code embodied thereon, the computer program code configured to, when executed, cause an apparatus to perform actions in the method according to any example in the first aspect.

Also disclosed is a computer program product comprising the computer-readable storage media.

With embodiments of the present disclosure, there is provided a new solution for data transmission in a wireless communication system, in which the RF retuning can be performed in a plurality of symbols, which might obtain the frequency diversity and at the same time can reduce transmission mistakes and improve the transmission efficiency.

### BRIEF DESCRIPTION OF THE DRAWINGS

The above and other features of the present disclosure will become more apparent through detailed explanation on the embodiments as illustrated in the embodiments with reference to the accompanying drawings, throughout which like reference numbers represent same or similar components and wherein:
Fig. 1 schematically illustrates a flowchart of a method of data transmission in a wireless communication system according to an embodiment of the present disclosure;
Fig. 2 schematically illustrates an exemplary frequency hopping pattern of the frequency hopping interval for an FDD system according to an embodiment of the present disclosure;
Fig. 3A schematically illustrates exemplary configuration of the RF retuning for an FDD system according to an embodiment of the present disclosure;
Fig. 3B schematically illustrates another exemplary configuration of the RF retuning for an FDD according to an embodiment of the present disclosure;
Fig. 4A schematically illustrates a further exemplary configuration of the RF retuning for an FDD system according to an embodiment of the present disclosure;
Fig. 4B schematically illustrates a still further exemplary configuration of the RF retuning for an FDD system according to an embodiment of the present disclosure;
Fig. 5 schemetically illustrates a frame configuration for a TDD system;
Fig. 6 schematically illustrates an exemplary configuration of the RF retuning for a TDD system according to an embodiment of the present disclosure;
Fig. 7 schematically illustrates another exemplary configuration of the RF retuning for a TDD system according to an embodiment of the present disclosure; and
Fig. 8 schematically illustrates a block diagram of an apparatus for data transmission in a wireless communication system according to an embodiment of the present disclosure.

### DETAILED DESCRIPTION OF EMBODIMENTS

Hereinafter, the solution as provided in the present disclosure will be described in details through embodiments with reference to the accompanying drawings. It should be appreciated that these embodiments are presented only to enable those skilled in the art to better understand and implement the present disclosure, not intended to limit the scope of the present disclosure in any manner.

In the accompanying drawings, various embodiments of the present disclosure are illustrated in block diagrams, flow charts and other diagrams. Each block in the flowcharts or blocks may represent a module, a program, or a part of code, which contains one or more executable instructions for performing specified logic functions, and in the present disclosure, a dispensable block is illustrated in a dotted line. Besides, although these blocks are illustrated in particular sequences for performing the steps of the methods, as a matter of fact, they may not necessarily be performed strictly according to the illustrated sequence. For example, they might be performed in reverse sequence or simultaneously, which is dependent on natures of respective operations. It should also be noted that block diagrams and/or each block in the flowcharts and a combination of thereof may be implemented by a dedicated hardware-based system for performing specified functions/operations or by a combination of dedicated hardware and computer instructions.

Generally, all terms used in the claims are to be interpreted according to their ordinary meaning in the technical field, unless explicitly defined otherwise herein. All references to "a/an/the/said [element, device, component, means, step, etc]" are to be interpreted openly as referring to at least one instance of said element, device, component, means, unit, step, etc., without excluding a plurality of such devices, components, means, units, steps, etc., unless explicitly stated otherwise. Besides, the indefinite article "a/an" as used herein does not exclude a plurality of such steps, units, modules, devices, and objects, and etc.

Additionally, in a context of the present disclosure, a user equipment (UE) may refer to a terminal, a Mobile Terminal (MT), a Subscriber Station (SS), a Portable Subscriber Station (PSS), Mobile Station (MS), or an Access Terminal (AT), and some or all of the functions of the UE, the terminal, the MT, the SS, the PSS, the MS, or the AT may be included. Furthermore, in the context of the present disclosure, the term "BS" may represent, e.g., a node B (NodeB or NB), an evolved NodeB (eNodeB or eNB), a radio header (RH), a remote radio head (RRH), a relay, or a low power node such as a femto, a pico, and so on.

Next, reference will be made to the accompany drawings to describe the solution as provided therein. In the following, the uplink transmission and MTC will be taken as examples to describe the embodiments of the present disclosure; however, it should be appreciated that the present disclosure is not limited thereto and in fact the solution as provided herein can also be used for the downlink data transmission.

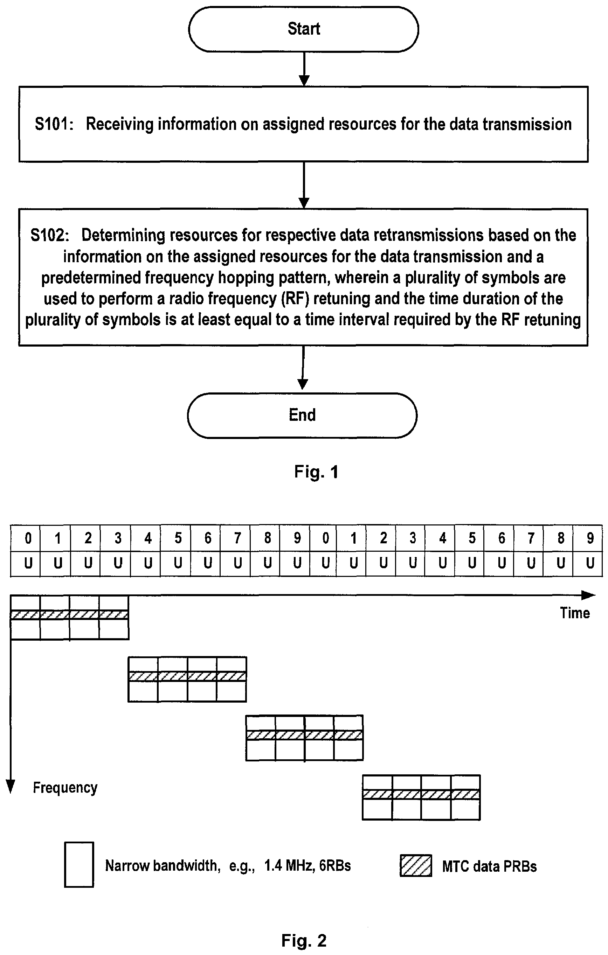

Fig. 1 schematically illustrates a flowchart of a method of data transmission in a wireless communication system according to an embodiment of the present disclosure. As illustrated in Fig. 1, first as step S101, information on assigned resources for the data transmission is received. For the uplink data transmission, for example, after determining assigned resource for a UE, the eNB sends the uplink grant to the UE through Physical Downlink Control Channel (PDCCH)/enhanced PDCCH (EPDCCH) and the UE receives the uplink grant from the eNB. The uplink grant may indicate information on transmission resource assigned to the UE for the uplink transmission. For example, the uplink grant may comprise information for assigned physical resource blocks (PRBs), and/or the location of narrow band for the data transmission. The assigned PRBs may indicate original assigned physical resource blocks (PRBs) for the uplink data transmission. The location of narrow band for the data transmission indicates the frequency resources which can be used for the uplink data transmission. As agreed in RAN 1# 781bis, a reduced bandwidth of 1.4MHz will be used. Thus, the location of narrow band indicates a segment of consecutive frequency resources, which may be indicated by the central frequency and the total bandwidth. The uplink grant may also comprise the number of the data retransmission N, i.e., the repetition times of PUSCH. The repetition times N can be configured by for example, high-layer signaling or through PDCCH/EPDCCH.

Then at step S102, resources for respective data retransmissions are determined based on the information on the assigned resource and a predetermined frequency hopping pattern. Particularly, a plurality of symbols will be used to perform a radio frequency (RF) retuning and a time duration of the plurality of symbols is at least equal to a time interval required by the RF retuning.

As is known, many of MTC UEs are targeted for low-end applications (low average revenue per user, and low data rate), and those UEs also have a low SNR, which means a bad signal quality. To make up for the problems of bad signal quality, retransmission is used for MTC. Through the data retransmission, it is possible to use the joint detection, which could increase the possibility of obtaining the transmitted data correctly.

On the other hand, in order to obtain frequency diversity gain, the frequency hopping will be performed so as to improve the transmission efficiency of MTC terminals. The frequency hopping may be performed in accordance with a predetermined frequency hopping pattern. The predetermined frequency hopping pattern indicates the way in which a frequency hopping is to be performed, particularly parameters used in the frequency hopping. For example, the predetermined frequency hopping pattern may indicate a frequency hopping interval m, a base frequency **f₀,** and a frequency offset Δf or frequency offset pattern to be used in frequency hopping. The frequency hopping interval m indicates the number of uplink subframes after which a frequency hopping will be performed in the time domain, which can be a predetermined value or configured by the eNB. The base frequency f₀ indicates the frequency at which the data transmission is performed. The base frequency f₀ may be determined based on the location of narrow band as indicated by the uplink grant. The frequency offset Δf or the frequency offset pattern indicates the amount of the frequency change after a frequency hopping is performed, which can be a predetermined value or configured by the eNB.

Fig. 2 schematically illustrates an exemplary frequency hopping pattern for an FDD system according to an embodiment of the present disclosure. As illustrated in Fig. 2, two consecutive uplink frames are illustrated, each of which comprises ten uplink subframes numbered from 0 to 9. In Fig. 2, the frequency hopping interval is determined as 4, which means the transmission frequency for MTC UEs will be changed or hopped every four subframes. In Fig. 2, the x axis denotes a change over time and y axis denotes the change of frequency.

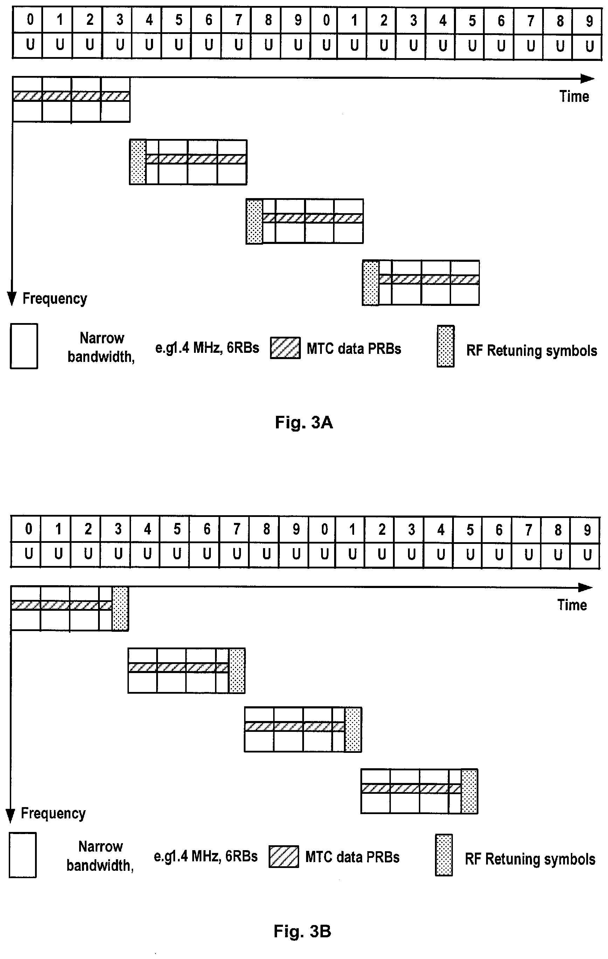

Fig. 3A schematically illustrates exemplary configurations of the RF retuning for an FDD system according to an embodiment of the present disclosure. As illustrated in Fig. 3A, the frequency hopping interval is 4, which is same as that in Fig. 2. In the configuration as illustrated in Fig. 3A, the plurality of symbols used for the RF retuning are a part of one subframes and particularly, is a part of the first one of the four subframes planned for the data retransmission at the next hopped frequency, as illustrated by block filled with dots in Fig. 3A. That is to say, a first part of symbols in this subframe will be used to perform the RF retuning while the remaining symbols in this subframe will be used to perform the data retransmission on the PUSCH.

Particularly, the UE will determine the Physical Resource Block(s) (PRB) used to transmit the i-th PUSCH when i is less than N (the predetermined number of data retransmission). For example, regarding the second data retransmission as illustrated in Fig. 3A, the UE will determine subframes 4 to 7 will be used for the i-the PUSCH transmission, wherein the first j symbols in the first subframe will be used to perform the RF tuning. The number of symbols may be determined as a minimal value that meets the RF retuning. It can be understood that the resource for the RF retuning is assigned in a unit of symbol and thus it will not introduce any transmission mistake due to a transmission beginning from the middle of a symbol.

Generally, it requires about a half of subframe to perform the RF retuning and thus if the remaining symbols can be used to the data retransmission, it will be advantageous since the remaining resource can be used efficiently. However, it can be understood that it is also possible to use more symbols than that is required.

Moreover, the UE will also determine fi, i.e., the frequency used to transmit the i-th PUSCH based on, for example, the base frequency f₀, and the frequency offset Δf as indicated by the predetermined frequency hopping pattern. For example fi may be determined as f₀+i^{∗}Δf or be determined based on f₀ and the predetermined frequency offset pattern. Then the UE can perform the RF retuning in the determined plurality of symbols and after the RF retuning is finished, it may start to transmit the i-th PUSCH at the hopped frequency.

Fig. 3B schematically illustrates another exemplary configuration of the RF retuning for an FDD according to an embodiment of the present disclosure. Different from the configuration as illustrated in Fig. 3A, the plurality of symbols in the last one of the four subframes planned for the data retransmission before the next frequency hopping will be used to perform the RF tuning, instead of those in the first one of subframes planned for the data retransmission at the next hopped frequency. Through the configuration as illustrated in Fig. 3B, it is also possible to achieve the RF retuning before the frequency hopping for the next data retransmission.

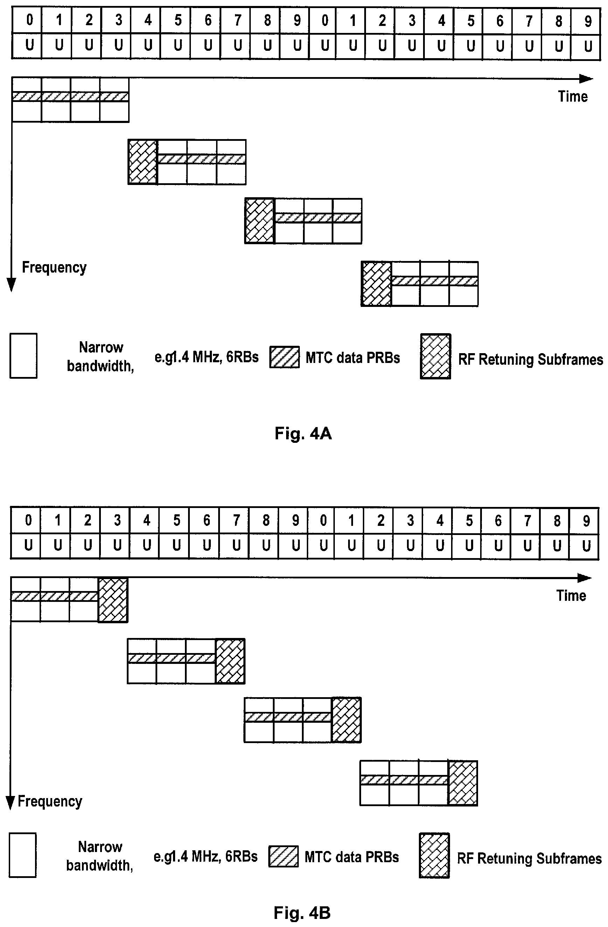

Figs. 4A and 4B schematically illustrate two further alternative exemplary configurations of the RF retuning for an FDD system according to embodiments of the present disclosure. Different from Figs. 3A and 3B, in Figs. 4A and Fig. 4B, a whole subframe is used to perform the RF retuning instead of only a part of one subframe. This means all symbols in the subframe are used for the RF tuning although the time length required by the RF retuning might be shorter than the time duration of a subframe. In Fig. 4A, the first one of the four subframes planned for the data retransmission at the next hopped frequency is used to transmit the i-the PUSCH, while in Fig. 4B, the last one of the four subframes planned for the data retransmission before the next frequency hopping. By this, enough time is reserved for the RF retuning and thus it may also ensure the performing of the RF retuning.

Hereinabove, the embodiments of the present disclosure are described with reference to a FDD system; however, the present disclosure is not only limited to the FDD system. In Fact, it is also applicable to a TDD system as well. Next, description will be made to a solution for a TDD system as provided herein.

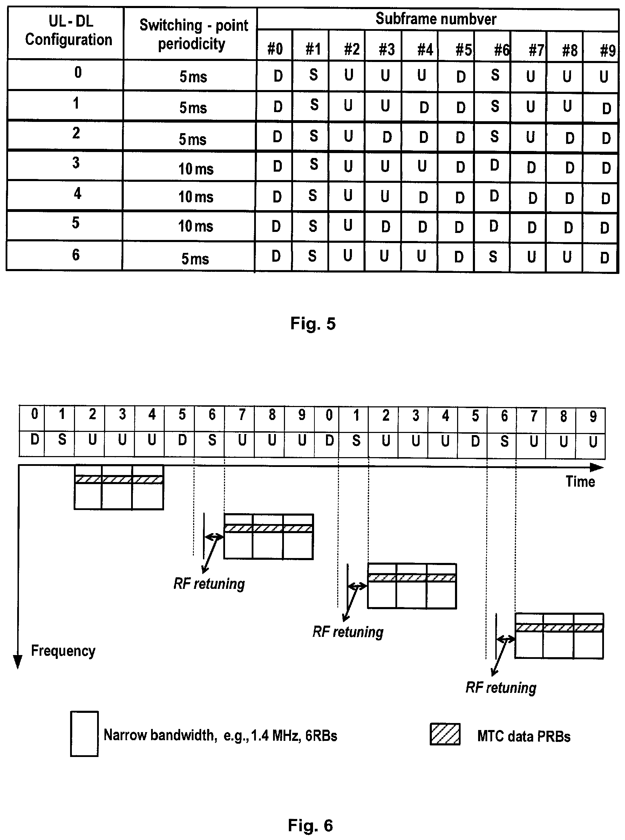

For a purpose of illustration, in Fig. 5, there is schematically illustrated an exemplary frame structure for a TDD system. As illustrated in Fig. 5, similar to a FDD radio frame, a TDD radio frame also consists of ten subframes labeled with 0 to 9. While different from the FDD radio frame, each of the subframes may be used for DL transmission or UL transmission, or used as a special subframe between the DL period and the UL period. Taking configuration 0 as an example, subframes 0 and 5 are used for the DL transmission, subframes 2 to 4 and subframes 7 to 9 are used for the UL transmission and subframes 1 and 6 are used as special subframes, which are labeled as "D", "U" and "S" respectively.

For example, regarding TDD configuration 0, there are three consecutive uplink subframe (i.e., subframes 2 to 4 and subframes 7 to 9), in such a case the hopping interval may be for example 3 uplink subframes. Thus, for the TDD configuration 0, similar to those illustrated in Fig.3A and 3B, the RF retuning can be performed in a plurality of symbols of the first one of subframes planned for the data retransmission at the next hopped frequency or the last one of subframes planned for the data retransmission before the next frequency hopping. Or alternatively, a whole subframe can be used to perform the RF retuning. The whole subframe particularly may be the first one of subframes planned for the data retransmission at the next hopped frequency or the last one of subframes planned for the data retransmission before the next frequency hopping.

However, the inventors further notice that the TDD frame has its own special structure, i.e., there is a special subframe between the DL period and the UL period, which is always located immediately after an downlink subframe ' "D" and before an uplink subframe "U." Thus, it is possible to have the RF retuning to be performed during the special subframe.

Reference is made to Fig. 6, which schematically illustrates an exemplary configuration of the RF retuning for a TDD system according to an embodiment of the present disclosure. In Fig. 6, frame configuration 0 is taken as an example again, which comprises three consecutive uplink subframes after each special subframe. In other word, a special subframe will be available every three uplink subframes. In such a case, the frequency hopping interval can be set as 3 and the special subframe between the frequency hoppings can be used to perform the RF retuning. In such a way, not only can the frequency diversity gain be obtained by the MTC during the repetitions but also the transmission mistakes can be avoided, and at the same time the impact of RF retuning time can further be reduced.

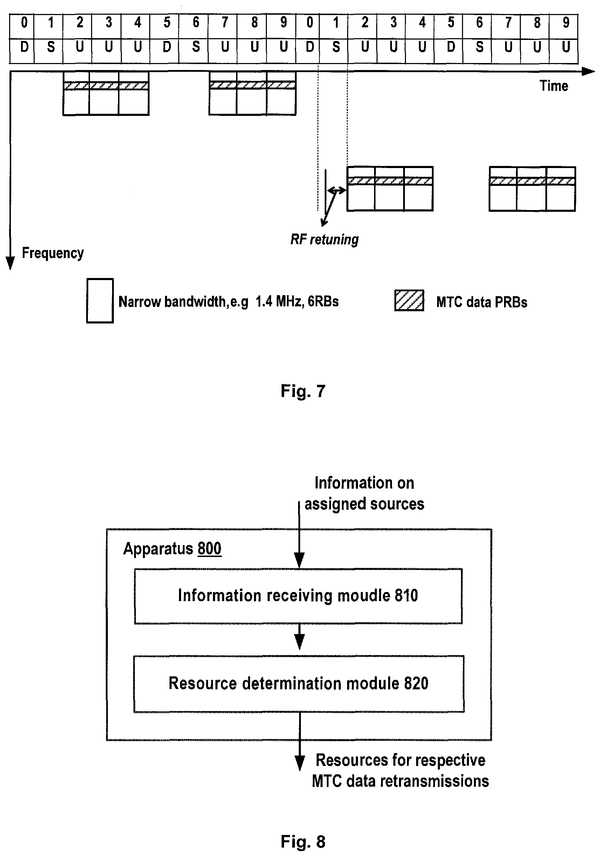

Fig. 7 schematically illustrates another exemplary configuration of the RF retuning for a TDD system according to an embodiment of the present disclosure. In Fig. 7, the configuration of the RF retuning is for frame configuration 0 but the frequency hopping interval is set as 6 instead of 3 of Fig. 6. Thus only the special subframe corresponding sub frame 1 in a second frame is used to perform the RF tuning, which is located between two frequency hoppings. It can be understood that, for frame configuration 0, the frequency hopping interval can be determined as the multiple of 3. That is to say, the frequency hopping interval can be determined based on the characteristics of the configuration.

From Fig. 5, it is clear that different frame configurations have different patterns and thus frequency hopping intervals suitable for different frame configurations are also different. Thus, the frequency hopping interval can be determined based on a configuration of subframe used for the data transmission. That is to say, for different subframe configurations, it can use different frequency hopping interval according to characteristics of different subframe configurations. Taking configuration 0 as an example, there are three consecutive subframes after a special subframe. Thus, in order to use the special subframe for RF retuning, the frequency hopping interval may be the multiple of 3, i.e., 3, 6 and so on, as illustrated in Figs. 6 and 7. For configuration 2, it contains two consecutive uplink subframes, and thus the frequency hopping interval may be the multiple of 2, i.e., 2, 4, 6 and so on. While, for configuration 6 which includes two or three consecutive uplink subframes after a special subframe, the frequency hopping interval may be the multiple of 5, i.e. 5, 10 and so on. In such a way, it may ensure that there is always a special subframe which can be used for the RF retuning.

With embodiments of the present disclosure, there is provided a new solution for data transmission in wireless communication system, in which the RF retuning can be performed in a plurality of symbols. That means when determining resource for the RF retuning, it considers not only the time length required by the RF retuning but also the starting point of the data retransmission to ensure that the data retransmission could start from a starting point of symbol instead of a middle thereof. In such a way, transmission mistakes can be reduced and the transmission efficiency can be improved. Besides, in the present disclosure, there is proposed to use a frequency hopping interval of at least two, preferable, 3 or more, which means cross-subframe channel estimation can be used, and thus the accuracy of channel estimation during each hopping period will be improved.

In addition to the method as described above, there is also provided an apparatus for data transmission in a wireless communication system according to an embodiment of the present disclosure. Next reference will be made to Fig. 8 to describe the apparatus as provided in the present disclosure.

As illustrated in Fig. 8, apparatus 800 may comprise an information receiving module 810 and a resource determination module 820. The information receiving module 810 is configured to receive information on assigned resources for the data transmission. The resource determination module 820 may be configured to determine resources for respective data retransmissions based on the information on the assigned resources for the data transmission and a predetermined frequency hopping pattern. Particularly, a plurality of symbols are used to perform a radio frequency (RF) retuning and the time duration of the plurality of symbols is at least equal to a time interval required by the RF retuning.

In an embodiment of the present disclosure, wherein the plurality of symbols may be a part of a subframe and resting symbols of the subframe may be used to perform the data retransmission. The subframe can be the first one of subframes planned for the data retransmission at the next hopped frequency. Or alternatively, the subframe can be the last one of subframes planned for the data retransmission before the next frequency hopping. Particularly, the number of symbols may be determined as a minimal value that meets the RF retuning.

In another embodiment of the present disclosure, a whole subframe may be used to perform the RF retuning. Particularly, the whole subframe may be the first one of subframes planned for the data retransmission at the next hopped frequency. Or alternatively, the whole subframe may be the last one of subframes planned for the data retransmission before the next frequency hopping.

In a still further embodiment of the present disclosure, the predetermined frequency hopping pattern may indicate a frequency hopping interval of at least two subframes in the time domain.

In a yet further embodiment of the present disclosure, the RF retuning may be performed in a special subframe between two frequency hoppings. Particularly, the frequency hopping interval in the time domain may be determined based on a configuration of subframe used for the data transmission.

In a yet further embodiment of the present disclosure, the data transmission may be an uplink data transmission for Machine Type Communication (MTC).

It is noted that the apparatus 800 may be configured to implement functionalities as described with reference to Figs. 1 to. 7. Therefore, for details about the operations of modules in these apparatus, one may refer to those descriptions made with respect to the respective steps of the methods with reference to Figs. 1 to 7.

It is further noted that the components of the apparatus 800 may be embodied in hardware, software, firmware, and/or any combination thereof. For example, the components of apparatus 800 may be respectively implemented by a circuit, a processor or any other appropriate selection device. Those skilled in the art will appreciate that the aforesaid examples are only for illustration not limitation.

In some embodiment of the present disclosure, apparatus 800 may comprise at least one processor. The at least one processor suitable for use with embodiments of the present disclosure may include, by way of example, both general and special purpose processors already known or developed in the future. Apparatus 800 may further comprise at least one memory. The at least one memory may include, for example, semiconductor memory devices, e.g., RAM, ROM, EPROM, EEPROM, and flash memory devices. The at least one memory may be used to store program of computer executable instructions. The program can be written in any high-level and/or low-level compliable or interpretable programming languages. In accordance with embodiments, the computer executable instructions may be configured, with the at least one processor, to cause apparatus 800 to at least perform operations according to the method as discussed with reference to Figs. 1 to 7 respectively.

Hereinbefore, detailed descriptions of solutions as provided in the present disclosure are given with reference to specific embodiments of the present disclosure; however, the present disclosure is not limited thereto. It may be appreciated that embodiments of the present disclosure are described with reference to MTC; however, the present invention is not limited thereto and the present invention may be used any communication with a low SNR in LTE system. Besides, hereinabove, the uplink data transmission is described; however, the solution as provided in the present disclosure can also be used in the downlink data transmission. In such a case, the object of concern will be downlink subframe instead of the uplink subframe, and after the information on assigned resource is determined by the eNB, the information will send to the module for determining resource for the data retransmission in the eNB and the resource determination will be performed at the eNB, instead of the UE. Besides, for the TDD system, the frequency hopping interval may be determined by considering the number of consecutive downlink subframes and the availability of the special subframe.

Additionally, based on the above description, the skilled in the art would appreciate that the present disclosure may be embodied in an apparatus, a method, or a computer program product. In general, the various exemplary embodiments may be implemented in hardware or special purpose circuits, software, logic or any combination thereof. For example, some aspects may be implemented in hardware, while other aspects may be implemented in firmware or software which may be executed by a controller, microprocessor or other computing device, although the disclosure is not limited thereto. While various aspects of the exemplary embodiments of this disclosure may be illustrated and described as block diagrams, flowcharts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The various blocks shown in the companying drawings may be viewed as method steps, and/or as operations that result from operation of computer program code, and/or as a plurality of coupled logic circuit elements constructed to carry out the associated function(s). At least some aspects of the exemplary embodiments of the disclosures may be practiced in various components such as integrated circuit chips and modules, and that the exemplary embodiments of this disclosure may be realized in an apparatus that is embodied as an integrated circuit, FPGA or ASIC that is configurable to operate in accordance with the exemplary embodiments of the present disclosure.

While this specification contains many specific implementation details, these should not be construed as limitations on the scope of any disclosure or of what may be claimed, but rather as descriptions of features that may be specific to particular embodiments of particular disclosures. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Various modifications, adaptations to the foregoing exemplary embodiments of this disclosure may become apparent to those skilled in the relevant arts in view of the foregoing description, when read in conjunction with the accompanying drawings. Any and all modifications will still fall within the scope of the non-limiting and exemplary embodiments of this disclosure. Furthermore, other embodiments of the disclosures set forth herein will come to mind to one skilled in the art to which these embodiments of the disclosure pertain having the benefit of the teachings presented in the foregoing descriptions and the associated drawings.

The invention is solely defined by the appended claims.

## Claims

1. A method in a wireless communication system performed by a User Equipment, UE, the method comprising:
performing a radio frequency, RF, retuning for hopping from a first narrowband including a special subframe for Time Division Duplex, TDD, to a second narrowband including an uplink subframe for TDD,
wherein the special subframe comprises a start symbol and a last symbol, and the uplink subframe comprises a start symbol and a last symbol,
and wherein the UE performs the RF retuning and does not transmit in a period comprising the last symbol of the special subframe in the first narrowband, the period being shorter than a length of the special subframe; and
transmitting Physical Uplink Shared Channel, PUSCH, from the start symbol of the uplink subframe.

2. The method according to Claim 1, wherein the UE does not transmit in a plurality of symbols including the last symbol in the special subframe in the first narrowband.

3. The method of Claim 1 or 2, further comprising:
performing an RF retuning from a third narrowband, including a first subframe, carrying an uplink channel to a fourth narrowband, including a second subframe, carrying an uplink channel, wherein the first subframe comprises a start symbol and a last symbol, and the second subframe comprises a start symbol and a last symbol,
wherein the UE performs the RF retuning and does not transmit in a first period including the last symbol of the first subframe or a second period including the start symbol of the second subframe, wherein each of a duration of the first period and a duration of the second period is shorter than a length of a subframe respectively.

4. The method of any one of Claims 1 to 3, further comprising:
receiving, from a base station, an information indicating a repetition number; and
transmitting PUSCH in consecutive subframes, the number of the consecutive subframes corresponding to the repetition number.

5. The method of any one of Claims 1 to 4, further comprising: transmitting PUSCH using resources for frequency hopping, based on information configured by a base station.

6. A User Equipment, UE, in a wireless communication system, the UE comprising:
a module, configured to:
perform a radio frequency, RF, retuning for hopping from a first narrowband including a special subframe for Time Division Duplex, TDD, to a second narrowband including an uplink subframe for TDD,
wherein the special subframe comprises a start symbol and a last symbol, and the uplink subframe comprises a start symbol and a last symbol,
and wherein the module is configured to perform the RF retuning and not to transmit in a period comprising the last symbol of the special subframe in the first narrowband, the period being shorter than a length of the special subframe; and
the module is configured to transmit Physical Uplink Shared Channel, PUSCH, from the start symbol of the uplink subframe.

7. The UE of Claim 6, wherein the module is configured not to transmit in a plurality of symbols including the last symbol in the special subframe in the first narrowband.

8. The UE of Claim 6 or 7, wherein the module is further configured to:
perform an RF retuning from a third narrowband, including a first subframe, carrying an uplink channel to a fourth narrowband, including a second subframe, carrying an uplink channel, wherein the first subframe comprises a start symbol and a last symbol, and the second subframe comprises a start symbol and a last symbol; and
perform the RF retuning and not transmit in a first period including the last symbol of the first subframe or a second period including the start symbol of the second subframe, wherein each of a duration of the first period and a duration of the second period is shorter than a length of a subframe respectively.

9. The UE of any one of Claims 6 to 8, the module further being configured to:
receive, from a base station, an information indicating a repetition number; and
transmit PUSCH in consecutive subframes, the number of the consecutive subframes corresponding to the repetition number.

10. The UE of any one of Claims 6 to 9, the module further being configured to: transmit PUSCH using resources for frequency hopping, based on information configured by a base station.

11. A method in a wireless communication system comprising a base station and a User Equipment, UE, the method comprising:
performing, by the UE, a radio frequency, RF, retuning from a first narrowband including a special subframe for Time Division Duplex, TDD, to a second narrowband including an uplink subframe for TDD,
wherein the special subframe comprises a start symbol and a last symbol, and the uplink subframe comprises a start symbol and a last symbol,
and wherein the UE performs the RF retuning and does not transmit in a period comprising the last symbol of the special subframe in the first narrowband, the period being shorter than a length of the special subframe; and
transmitting, by the UE, Physical Uplink Shared Channel, PUSCH, from the start symbol of the uplink subframe; and
receiving, by the base station, the Physical Uplink Shared Channel, PUSCH, from the start symbol of the uplink subframe, from the UE.

12. The method of Claim 11, wherein the UE does not transmit in a plurality of symbols including the last symbol in the special subframe in the first narrowband.

13. The method of Claim 11 or 12, further comprising:
performing, by the UE, an RF retuning from a third narrowband, including a first subframe, carrying an uplink channel to a fourth narrowband, including a second subframe, carrying an uplink channel, wherein the first subframe comprises a start symbol and a last symbol, and the second subframe comprises a start symbol and a last symbol,
wherein the UE performs the RF retuning and does not transmit in a first period including the last symbol of the first subframe or a second period including the start symbol of the second subframe, wherein each of a duration of the first period and a duration of the second period is shorter than a length of a subframe respectively.

14. A wireless communication system comprising a base station and a User Equipment, UE, wherein:
the UE is configured to:
perform a radio frequency, RF, retuning from a first narrowband including a special subframe for Time Division Duplex, TDD, to a second narrowband including an uplink subframe for TDD,
wherein the special subframe comprises a start symbol and a last symbol, and the uplink subframe comprises a start symbol and a last symbol,
and wherein the UE is configured to perform the RF retuning and not transmit in a period comprising the last symbol of the special subframe in the first narrowband, the period being shorter than a length of the special subframe; and the UE is configured to transmit Physical Uplink Shared Channel, PUSCH, from the start symbol of the uplink subframe; and
the base station is configured to receive the Physical Uplink Shared Channel, PUSCH, from the start symbol of the uplink subframe, from the UE.

15. The wireless communication system of Claim 14, wherein the UE is configured to not transmit in a plurality of symbols including the last symbol in the special subframe in the first narrowband.

## Patentansprüche

1. Verfahren in einem Drahtloskommunikationssystem, das von einem Benutzergerät, UE, durchgeführt wird, wobei das Verfahren aufweist:
Durchführen einer Funkfrequenz-, RF-, Neuabstimmung zum Springen von einem ersten Schmalband, das einen speziellen Subrahmen für Zeitteilungsduplex, TDD, umfasst, auf ein zweites Schmalband, das einen Uplink-Subrahmen für TDD umfasst,
wobei der spezielle Subrahmen ein Startsymbol und ein letztes Symbol aufweist, wobei der Uplink-Subrahmen ein Startsymbol und ein letztes Symbol aufweist,
und wobei das UE die RF-Neuabstimmung durchführt und in einer Zeitspanne, welche das letzte Symbol des speziellen Subrahmens in dem ersten Schmalband aufweist, nicht überträgt, wobei die Zeitspanne kürzer als eine Länge des speziellen Subrahmens ist; und
Übertragen eines gemeinsam genutzten physikalischen Uplink-Kanals, PUSCH, ab dem Startsymbol des Uplink-Subrahmens.

2. Verfahren nach Anspruch 1, wobei das UE in mehreren Symbolen, die das letzte Symbol in dem speziellen Subrahmen in dem ersten Schmalband umfassen, nicht überträgt.

3. Verfahren nach Anspruch 1 oder 2, das ferner aufweist:
Durchführen einer RF-Neuabstimmung von einem dritten Schmalband, das einen ersten Subrahmen umfasst, der einen Uplink-Kanal transportiert, auf ein viertes Schmalband, das einen zweiten Subrahmen, der einen Uplink-Kanal transportiert, umfasst, wobei der erste Subrahmen ein Startsymbol und ein letztes Symbol aufweist und der zweite Subrahmen ein Startsymbol und ein letztes Symbol aufweist,
wobei das UE die RF-Neuabstimmung durchführt und in einer ersten Zeitspanne, die das letzte Symbol des ersten Subrahmens umfasst, oder einer zweiten Zeitspanne, die das Startsymbol des zweiten Subrahmens umfasst, nicht überträgt, wobei jeweils eine Dauer der ersten Zeitspanne und eine Dauer der zweiten Zeitspanne jeweils kürzer als eine Länge eines Subrahmens sind.

4. Verfahren nach einem der Ansprüche 1 bis 3, das ferner aufweist:
Empfangen einer Information, die eine Wiederholungszahl anzeigt, von einer Basisstation; und
Übertragen des PUSCH in aufeinanderfolgenden Subrahmen, wobei die Anzahl aufeinanderfolgender Subrahmen der Wiederholungsanzahl entspricht.

5. Verfahren nach einem der Ansprüche 1 bis 4, das ferner aufweist: Übertragen des PUSCH unter Verwendung von Ressourcen für das Frequenzspringen basierend auf Informationen, die von einer Basisstation konfiguriert werden.

6. Benutzergerät, UE, in einem Drahtloskommunikationssystem, wobei das UE aufweist:
ein Modul, das konfiguriert ist, um:
eine Funkfrequenz-, RF-, Neuabstimmung zum Springen von einem ersten Schmalband, das einen speziellen Subrahmen für Zeitteilungsduplex, TDD, umfasst, auf ein zweites Schmalband, das einen Uplink-Subrahmen für TDD umfasst, durchzuführen,
wobei der spezielle Subrahmen ein Startsymbol und ein letztes Symbol aufweist, und wobei der Uplink-Subrahmen ein Startsymbol und ein letztes Symbol aufweist,
und wobei das Modul konfiguriert ist, um die RF-Neuabstimmung durchzuführen und in einer Zeitspanne, welche das letzte Symbol des speziellen Subrahmens in dem ersten Schmalband aufweist, nicht zu übertragen, wobei die Zeitspanne kürzer als eine Länge des speziellen Subrahmens ist; und
wobei das Modul konfiguriert ist, um einen gemeinsam genutzten physikalischen Uplink-Kanal, PUSCH, ab dem Startsymbol des Uplink-Subrahmens zu übertragen.

7. UE nach Anspruch 6, wobei das Modul konfiguriert ist, um in mehreren Symbolen, die das letzte Symbol in dem speziellen Subrahmen in dem ersten Schmalband umfassen, nicht zu übertragen.

8. UE nach Anspruch 6 oder 7, wobei das Modul ferner konfiguriert ist, um:
eine RF-Neuabstimmung von einem dritten Schmalband, das einen ersten Subrahmen umfasst, der einen Uplink-Kanal transportiert, auf ein viertes Schmalband, das einen zweiten Subrahmen, der einen Uplink-Kanal transportiert, umfasst, durchzuführen, wobei der erste Subrahmen ein Startsymbol und ein letztes Symbol aufweist und der zweite Subrahmen ein Startsymbol und ein letztes Symbol aufweist,
die RF-Neuabstimmung durchzuführen und in einer ersten Zeitspanne, die das letzte Symbol des ersten Subrahmens umfasst, oder einer zweiten Zeitspanne, die das Startsymbol des zweiten Subrahmens umfasst, nicht zu übertragen, wobei jeweils eine Dauer der ersten Zeitspanne und eine Dauer der zweiten Zeitspanne jeweils kürzer als eine Länge eines Subrahmens sind.

9. UE nach einem der Ansprüche 6 bis 8, wobei das Modul ferner konfiguriert ist, um:
von einer Basisstation eine Information, die eine Wiederholungszahl anzeigt, zu empfangen, und den PUSCH in aufeinanderfolgenden Subrahmen zu übertragen, wobei die Anzahl aufeinanderfolgender Subrahmen der Wiederholungszahl entspricht.

10. UE nach einem der Ansprüche 6 bis 9, wobei das Modul ferner konfiguriert ist, um: den PUSCH basierend auf Informationen, die von einer Basisstation konfiguriert werden, unter Verwendung von Ressourcen zum Frequenzspringen zu übertragen.

11. Verfahren in einem Drahtloskommunikationssystem, das eine Basisstation und ein Benutzergerät, UE, aufweist, wobei das Verfahren aufweist:
Durchführen einer Funkfrequenz-, RF-, Neuabstimmung von einem ersten Schmalband, das einen speziellen Subrahmen für Zeitteilungsduplex, TDD, umfasst, auf ein zweites Schmalband, das einen Uplink-Subrahmen für TDD umfasst, durch das UE,
wobei der spezielle Subrahmen ein Startsymbol und ein letztes Symbol aufweist, wobei der Uplink-Subrahmen ein Startsymbol und ein letztes Symbol aufweist,
und wobei das UE die RF-Neuabstimmung durchführt und in einer Zeitspanne, welche das letzte Symbol des speziellen Subrahmens in dem ersten Schmalband aufweist, nicht überträgt, wobei die Zeitspanne kürzer als eine Länge des speziellen Subrahmens ist; und
Übertragen eines gemeinsam genutzten physikalischen Uplink-Kanals, PUSCH, ab dem Startsymbol des Uplink-Subrahmens durch das UE; und
Empfangen des gemeinsam genutzten physikalischen Uplink-Kanals, PUSCH, ab dem Startsymbol des Uplink-Subrahmens von dem UE durch die Basisstation.

12. Verfahren nach Anspruch 11, wobei das UE in mehreren Symbolen, die das letzte Symbol in dem speziellen Subrahmen in dem ersten Schmalband umfassen, nicht überträgt.

13. Verfahren nach Anspruch 11 oder 12, das ferner aufweist:
Durchführen einer RF-Neuabstimmung von einem dritten Schmalband, das einen ersten Subrahmen umfasst, der einen Uplink-Kanal transportiert, auf ein viertes Schmalband, das einen zweiten Subrahmen, der einen Uplink-Kanal transportiert, umfasst, durch das UE wobei der erste Subrahmen ein Startsymbol und ein letztes Symbol aufweist und der zweite Subrahmen ein Startsymbol und ein letztes Symbol aufweist,
wobei das UE die RF-Neuabstimmung durchführt und in einer ersten Zeitspanne, die das letzte Symbol des ersten Subrahmens umfasst, oder einer zweiten Zeitspanne, die das Startsymbol des zweiten Subrahmens umfasst, nicht überträgt, wobei jeweils eine Dauer der ersten Zeitspanne und eine Dauer der zweiten Zeitspanne jeweils kürzer als eine Länge eines Subrahmens sind.

14. Drahtloskommunikationssystem, das eine Basisstation und ein Benutzergerät, UE, aufweist, wobei:
das UE konfiguriert ist, um:
eine Funkfrequenz-, RF-, Neuabstimmung von einem ersten Schmalband, das einen speziellen Subrahmen für Zeitteilungsduplex, TDD, umfasst, auf ein zweites Schmalband, das einen Uplink-Subrahmen für TDD umfasst, durchzuführen,
wobei der spezielle Subrahmen ein Startsymbol und ein letztes Symbol aufweist, wobei der Uplink-Subrahmen ein Startsymbol und ein letztes Symbol aufweist,
und wobei das UE konfiguriert ist, um die RF-Neuabstimmung durchzuführen und in einer Zeitspanne, welche das letzte Symbol des speziellen Subrahmens, in dem ersten Schmalband aufweist, nicht zu übertragen, wobei die Zeitspanne kürzer als eine Länge des speziellen Subrahmens ist; und wobei das UE konfiguriert ist, um einen gemeinsam genutzten physikalischen Uplink-Kanal, PUSCH, ab dem Startsymbol des Uplink-Subrahmens zu übertragen; und
wobei die Basisstation konfiguriert ist, um den gemeinsam genutzten physikalischen Uplink-Kanal, PUSCH, ab dem Startsymbol des Uplink-Subrahmens von dem UE zu empfangen.

15. Drahtloskommunikationssystem nach Anspruch 14, wobei das UE konfiguriert ist, um in mehreren Symbolen, die das letzte Symbol in dem speziellen Subrahmen in dem ersten Schmalband umfassen, nicht zu übertragen.

## Revendications

1. Procédé dans un système de communication sans fil réalisé par un équipement d'utilisateur, UE, le procédé comprenant :
la réalisation d'un ré-accord de radiofréquence, RF, pour sauter d'une première bande étroite comportant une sous-trame spéciale pour un duplex à répartition dans le temps, TDD, à une deuxième bande étroite comportant une sous-trame de liaison montante pour TDD,
dans lequel la sous-trame spéciale comprend un symbole de départ et un dernier symbole, et la sous-trame de liaison montante comprend un symbole de départ et un dernier symbole,
et dans lequel l'UE réalise le ré-accord de RF et n'effectue pas de transmission dans une période comprenant le dernier symbole de la sous-trame spéciale dans la première bande étroite, la période étant plus courte qu'une longueur de la sous-trame spéciale ; et
la transmission d'un canal partagé de liaison montante physique, PUSCH, à partir du symbole de départ de la sous-trame de liaison montante.

2. Procédé selon la revendication 1, dans lequel l'UE n'effectue pas de transmission dans une pluralité de symboles comportant le dernier symbole dans la sous-trame spéciale dans la première bande étroite.

3. Procédé de la revendication 1 ou 2, comprenant en outre :
la réalisation d'un ré-accord de RF à partir d'une troisième bande étroite, comportant une première sous-trame, transportant un canal de liaison montante vers une quatrième bande étroite, comportant une deuxième sous-trame, transportant un canal de liaison montante, dans lequel la première sous-trame comprend un symbole de départ et un dernier symbole, et la deuxième sous-trame comprend un symbole de départ et un dernier symbole,
dans lequel l'UE réalise le ré-accord de RF et n'effectue pas de transmission dans une première période comportant le dernier symbole de la première sous-trame ou une deuxième période comportant le symbole de départ de la deuxième sous-trame, dans lequel chacune parmi une durée de la première période et une durée de la deuxième période est plus courte qu'une longueur d'une sous-trame respectivement.

4. Procédé de l'une quelconque des revendications 1 à 3, comprenant en outre :
la réception, à partir d'une station de base, d'une information indiquant un nombre de répétitions ; et
la transmission de PUSCH en sous-trames consécutives, le nombre des sous-trames consécutives correspondant au nombre de répétitions.

5. Procédé de l'une quelconque des revendications 1 à 4, comprenant en outre : la transmission de PUSCH en utilisant des ressources pour le saut de fréquence, sur la base d'informations configurées par une station de base.

6. Equipement d'utilisateur, UE, dans un système de communication sans fil, l'UE comprenant :
un module, configuré pour :
réaliser un ré-accord de radiofréquence, RF, pour sauter d'une première bande étroite comportant une sous-trame spéciale pour duplex à répartition dans le temps, TDD, à une deuxième bande étroite comportant une sous-trame de liaison montante pour TDD,
dans lequel la sous-trame spéciale comprend un symbole de départ et un dernier symbole, et la sous-trame de liaison montante comprend un symbole de départ et un dernier symbole,
et dans lequel le module est configuré pour réaliser le ré-accord de RF et pour ne pas effectuer de transmission dans une période comprenant le dernier symbole de la sous-trame spéciale dans la première bande étroite, la période étant plus courte qu'une longueur de la sous-trame spéciale ; et
le module est configuré pour transmettre le canal partagé de liaison montante physique, PUSCH, à partir du symbole de départ de la sous-trame de liaison montante.

7. UE de la revendication 6, dans lequel le module est configuré pour ne pas effectuer de transmission dans une pluralité de symboles comportant le dernier symbole dans la sous-trame spéciale dans la première bande étroite.

8. UE de la revendication 6 ou 7, dans lequel le module est en outre configuré pour :
réaliser un ré-accord de RF à partir d'une troisième bande étroite, comportant une première sous-trame transportant un canal de liaison montante vers une quatrième bande étroite, comportant une deuxième sous-trame transportant un canal de liaison montante, dans lequel la première sous-trame comprend un symbole de départ et un dernier symbole, et la deuxième sous-trame comprend un symbole de départ et un dernier symbole ; et
réaliser le ré-accord de RF et ne pas effectuer de transmission dans une première période comportant le dernier symbole de la première sous-trame ou une deuxième période comportant le symbole de départ de la deuxième sous-trame, dans lequel chacune parmi une durée de la première période et une durée de la deuxième période est plus courte qu'une longueur d'une sous-trame respectivement.

9. UE de l'une quelconque des revendications 6 à 8, le module étant en outre configuré pour :
recevoir, à partir d'une station de base, une information indiquant un nombre de répétitions ; et
transmettre le PUSCH en sous-trames consécutives, le nombre des sous-trames consécutives correspondant au nombre de répétitions.

10. UE de l'une quelconque des revendications 6 à 9, le module étant en outre configuré pour : transmettre le PUSCH en utilisant des ressources pour le saut de fréquence, sur la base d'informations configurées par une station de base.

11. Procédé dans un système de communication sans fil comprenant une station de base et un équipement d'utilisateur, UE, le procédé comprenant :
la réalisation, par l'UE, d'un ré-accord de radiofréquence, RF, à partir d'une première bande étroite comportant une sous-trame spéciale pour duplex à répartition dans le temps, TDD, à une deuxième bande étroite comportant une sous-trame de liaison montante pour TDD,
dans lequel la sous-trame spéciale comprend un symbole de départ et un dernier symbole, et la sous-trame de liaison montante comprend un symbole de départ et un dernier symbole,
et dans lequel l'UE, réalise le ré-accord de RF et n'effectue pas de transmission dans une période comprenant le dernier symbole de la sous-trame spéciale dans la première bande étroite, la période étant plus courte qu'une longueur de la sous-trame spéciale ; et
la transmission, par l'UE, d'un canal partagé de liaison montante physique, PUSCH, à partir du symbole de départ de la sous-trame de liaison montante ; et
la réception, par la station de base, du canal partagé de liaison montante physique, PUSCH, à partir du symbole de départ de la sous-trame de liaison montante, à partir de l'UE.

12. Procédé de la revendication 11, dans lequel l'UE n'effectue pas de transmission dans une pluralité de symboles comportant le dernier symbole dans la sous-trame spéciale dans la première bande étroite.

13. Procédé de la revendication 11 ou 12, comprenant en outre :
la réalisation, par l'UE, d'un ré-accord de RF à partir d'une troisième bande étroite, comportant une première sous-trame, transportant un canal de liaison montante vers une quatrième bande étroite, comportant une deuxième sous-trame, transportant un canal de liaison montante, dans lequel la première sous-trame comprend un symbole de départ et un dernier symbole, et la deuxième sous-trame comprend un symbole de départ et un dernier symbole,
dans lequel l'UE réalise le ré-accord de RF et n'effectue pas de transmission dans une première période comportant le dernier symbole de la première sous-trame ou une deuxième période comportant le symbole de départ de la deuxième sous-trame, dans lequel chacune parmi une durée de la première période et une durée de la deuxième période est plus courte qu'une longueur d'une sous-trame respectivement.

14. Système de communication sans fil comprenant une station de base et un équipement d'utilisateur, UE, dans lequel :
l'UE est configuré pour :
réaliser un ré-accord de radiofréquence, RF, à partir d'une première bande étroite comportant une sous-trame spéciale pour duplex à répartition dans le temps, TDD, à une deuxième bande étroite comportant une sous-trame de liaison montante pour TDD,
dans lequel la sous-trame spéciale comprend un symbole de départ et un dernier symbole, et la sous-trame de liaison montante comprend un symbole de départ et un dernier symbole,
et dans lequel l'UE est configuré pour réaliser le ré-accord de RF et n'effectue pas de transmission dans une période comprenant le dernier symbole de la sous-trame spéciale dans la première bande étroite, la période étant plus courte qu'une longueur de la sous-trame spéciale ; et l'UE est configuré pour transmettre un canal partagé de liaison montante physique, PUSCH, à partir du symbole de départ de la sous-trame de liaison montante ; et
la station de base est configurée pour recevoir le canal partagé de liaison montante physique, PUSCH, à partir du symbole de départ de la sous-trame de liaison montante, à partir de l'UE.

15. Système de communication sans fil de la revendication 14, dans lequel l'UE est configuré pour ne pas effectuer de transmission dans une pluralité de symboles comportant le dernier symbole dans la sous-trame spéciale dans la première bande étroite.
